# FASCICULE DE BREVET EUROPEEN

(11) **EP 0 930 663 B1**
(45) Date de publication et mention de la délivrance du brevet: **18.10.2006**
(21) Numéro de dépôt: 99400049.5
(22) Date de dépôt: 11.01.1999
(51) Int. Cl.: H01M 4/62, H01M 4/32

(54) **Electrode non-frittée au nickel**
Nichtgesinterte Nickelelektrode
Non-sintered nickel electrode

(30) Priorité: 15.01.1998 FR 9800349
(43) Date de publication de la demande: 21.07.1999
(73) Titulaire: Saft Finance S.à.r.l., 1471 Luxembourg (LU)
(72) Inventeur: Bernard, Patrick, 91300 Massy (FR); Dennig, Corinne, 92600 Asnieres sur Seine (FR); Cocciantelli, Jean-Michel, 33000 Bordeaux (FR); Coco, Isabelle, 40100 Dax (FR); Alcorta, José, 33000 Bordeaux (FR)
(74) Mandataire: Pochart, François

(56) Documents cités:
- EP-A- 0 726 607
- EP-A- 0 806 802
- PATENT ABSTRACTS OF JAPAN vol. 013, no. 268 (E-775), 20 juin 1989 & JP 01 059767 A (HITACHI CHEM CO LTD), 7 mars 1989

## Description

La présente invention concerne une électrode non-frittée au nickel telle que celle qui est utilisée dans les générateurs électrochimiques secondaires à électrolyte alcalin, comme par exemple les accumulateurs nickel-cadmium, nickel-fer, nickel-hydrogène, nickel-métal hydrurable, et le générateur la contenant.

Il existe plusieurs types d'électrode, notamment les électrodes frittées et les électrodes non-frittées dite aussi empâtées ou plastifiées. Les électrodes les plus largement employées aujourd'hui sont de type non-fritté. Par rapport aux autres électrodes, une électrode non-frittée contient une plus grande quantité de matière active, sa capacité volumique est donc augmentée, et son coût de fabrication est plus faible.

Une électrode non-frittée se compose d'un support servant de collecteur de courant sur lequel on enduit une pâte contenant la matière active et un liant, auquel on ajoute le plus souvent un matériau conducteur. Elle est habituellement réalisée par dépôt de la pâte dans un support conducteur tridimensionnel poreux comme un feutre ou une mousse, métallique ou en carbone.

La demande de brevet européen EP-0 726 607 mentionne une électrode comprenant un support poreux revêtu d'une pâte. Le support n'est pas un composant critique, il peut être bidimensionnel ou tridimensionnel. La pâte contient la matière active, un agent conducteur, une résine fluorée et un épaississant. La résine fluorée utilisée comme liant peut être un mélange de résine fluorée et de résine thermoplastique. Ce document n'évoque pas le fonctionnement électrochimique de l'électrode.

Pour des raisons de coût, on se dirige maintenant vers l'utilisation de support conducteur bidimensionnel.

La demande de brevet japonais JP-3 165 469 propose une électrode de nickel comprenant un support conducteur poreux bi-dimensionnel recouvert d'une pâte comportant de l'hydroxyde de nickel, un matériau conducteur et un liant thermoplastique, comme un copolymère butylène / éthylène / styrène. Afin d'assurer la fixation de la matière active sur le support on presse à chaud un séparateur sur chaque face de l'électrode.

La demande de brevet européen EP-0 750 358 décrit une électrode de nickel non-frittée dont le support est une plaque métallique ondulée où on a formé des dents pour accrocher une couche micro rugueuse. Sur cette couche, on dépose une pâte comprenant de la carboxyméthylcellulose (CMC) et un copolymère styrène / butadiène (SBR).

Les liants connus et employés pour réaliser une électrode à support tridimensionnel se révèlent inadaptés à un support bidimensionnel. Dans les deux exemples qui précèdent, il a été nécessaire de faire appel à un moyen autre que le liant pour assurer la tenue mécanique de l'électrode.

La présente invention a pour but de proposer une électrode non-frittée au nickel à support bidimensionnel, ou plan, dont les tenues mécanique et chimique, notamment vis à vis de l'oxydation électrochimique, sont améliorées.

L'objet de la présente invention est une électrode non-frittée au nickel comportant un support conducteur bidimensionnel et une pâte comprenant une matière électrochimiquement active contenant de l'hydroxyde de nickel et un liant qui est un mélange d'un élastomère et d'un polymère cristallin, la proportion dudit élastomère étant comprise entre 25% et 60% en poids dudit liant et la proportion dudit polymère cristallin étant comprise entre 40% et 75% en poids dudit liant.

Un élastomère est un polymère qui présente des propriétés élastiques. Il se définit comme un polymère présentant un état viscoélastique à température ambiante Ta, ce qui signifie que sa température de transition vitreuse Tg est inférieure à la température ambiante Ta. L'utilisation d'un élastomère comme liant permet d'obtenir une électrode au nickel aux propriétés mécaniques adéquates. Cependant utilisé seul, il forme un film qui enrobe les grains de matière active et diminue fortement la conductivité électrique de l'électrode.

De préférence, ledit élastomère est choisi parmi un copolymère de styrène, d'éthylène, de butylène et de styrène (SEBS), un terpolymère de styrène, de butadiène et de vinylpyridine (SBVR) et un copolymère de styrène et de butadiène (SBR). Le copolymère de styrène et de butadiène contient de préférence de 25 à 35% en poids de styrène.

Contrairement aux autres élastomères, un élastomère réticulable va plutôt former des amas de polymère répartis sur et autour des grains de matière active. La réticulation permet de limiter le fluage du polymère. Avantageusement ledit élastomère est un copolymère carboxylé réticulable de styrène et de butadiène (SBR carboxylé), c'est à dire un SBR portant des groupements -COOH qui vont permettre sa réticulation.

Le liant est un composant essentiel de l'électrode car son rôle est à la fois mécanique et électrochimique.

Le liant a pour fonction d'assurer la cohésion des grains de matière active entre eux et sur le support de l'électrode, avant l'assemblage de l'accumulateur et durant son fonctionnement. D'une part le liant doit posséder une stabilité chimique suffisante. D'abord il doit être chimiquement inerte vis à vis des composants du générateur électrochimique ; ensuite il doit être capable de résister à l'oxydation électrochimique dans les conditions de cyclage qui sont imposées à l'électrode. Or certains liants présentent une dégradation de leurs propriétés adhésives au cours du cyclage. D'autre part le liant doit être capable de se déformer pour accompagner les variations dimensionnelles de l'électrode au cours du cyclage pendant toute sa durée de vie.

Le liant a également pour fonction de maintenir le contact électrique entre les grains de matière active et de favoriser les échanges ioniques avec l'électrolyte. D'une part la surface électrochimiquement active d'une électrode dépend de la surface mouillée par l'électrolyte. Pour favoriser la mouillabilité de l'électrode par l'électrolyte aqueux, le liant doit posséder un caractère hydrophile. Si l'électrode est insuffisamment mouillée, la surface active est diminuée, ce qui entraîne une augmentation de la densité de courant local et une plus faible capacité chargée. D'autre part la surface accessible à l'électrolyte dépend de la manière dont les grains de matière active sont enrobés et liés par le polymère. Le film de polymère doit présenter des discontinuités permettant les échanges électroniques.

Un polymère cristallin est caractérisé par l'existence d'une température de fusion. Ce polymère est solide à température ambiante. Un polymère cristallin n'est pas filmogène : utilisé seul, il n'a pas une cohésion suffisante pour assurer le maintien de la matière active sur le support.

De préférence ledit polymère cristallin est choisi parmi un polymère fluoré et une polyoléfine, comme le polyéthylène (PE).

Si ledit polymère cristallin est un polymère fluoré, il est de préférence choisi parmi un copolymère fluoré d'éthylène et de propylène (FEP), le polytétrafluoroéthylène (PTFE) et le polyhexafluoropropylène (PPHF).

D'un point de vue mécanique, plus la proportion d'élastomère est importante, meilleure est la cohésion de l'électrode. L'ajout d'un polymère cristallin a pour fonction de rompre la continuité du film d'élastomère, et donc de préserver les performances électrochimiques de l'électrode. Ledit liant selon l'invention doit contenir au moins 25% en poids d'élastomère. En-deça de cette proportion, la tenue mécanique de l'électrode n'est plus suffisamment assurée, notamment dans le cas d'une électrode spiralée.

Pour assurer la cohésion et le fonctionnent électrochimique de l'électrode pendant toute sa durée d'utilisation, la proportion dudit élastomère réticulable doit être comprise entre 25% et 60% en poids du liant et la proportion dudit polymère cristallin doit être comprise entre 40% et 75% en poids du liant.

Selon un mode d'exécution préférentiel, ledit liant se compose de 40% à 60% en poids dudit élastomère et de 40% à 60% en poids dudit polymère cristallin.

Si on introduit dans la pâte un taux de liant élevé, la conductivité électrique de l'électrode est diminuée, ce qui produit une baisse de l'énergie volumique du générateur. Il est donc indispensable de minimiser la perte inévitable de capacité qui résulte de l'élaboration de l'électrode, en s'efforçant d'y introduire la plus petite quantité possible de liant nécessaire mais suffisante pour assurer cette cohésion. En dessous de 0,7% en poids de liant, la tenue mécanique de l'électrode n'est plus satisfaisante. La proportion de liant selon l'invention est de préférence comprise entre 0,7% et 3% en poids de ladite pâte.

La présente invention a comme avantage qu'il suffit d'une faible masse de liant pour assurer la cohésion des électrodes en leur conservant une excellente souplesse, notamment dans le cas d'une électrode spiralée.

Il est bien entendu que le terme "matière électrochimiquement active contenant de l'hydroxyde de nickel" utilisé dans la présente demande peut signifier un hydroxyde de nickel, un hydroxyde contenant principalement du nickel, mais également un hydroxyde de nickel contenant au moins un hydroxyde syncristallisé d'un élément choisi parmi le zinc, le cadmium et le magnésium et au moins un hydroxyde syncristallisé d'un élément choisi parmi le cobalt, le manganèse, l'aluminium, l'yttrium, le calcium, le strontium, le zirconium, le cuivre. Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

De préférence cet hydroxyde a une forme sphéroïdale et possède une granulométrie comprise entre 7µm et 20µm.

La matière active peut être recouverte par un revêtement à base d'oxyde ou d'hydroxyde de cobalt contenant éventuellement d'autres éléments tels que le nickel, le zinc, l'aluminium et/ou le manganèse, ou bien encore par un revêtement métallique poreux, par exemple de nickel.

L'hydroxyde de nickel est un composé peu conducteur qui nécessite l'adjonction d'un matériau conducteur permettant une bonne percolation électrique. Ladite pâte comprend en outre un matériau conducteur choisi parmi des particules conductrices, des fibres conductrices et leurs mélanges.

On entend par "particule" une très petite quantité de matière, dont les trois dimensions de l'espace sont du même ordre de grandeur, définie par une dimension moyenne D₁. La forme des particules conductrices peut être sphérique, quasi-sphérique ou complètement irrégulière. De préférence lesdites particules conductrices ont une dimension moyenne D₁ inférieure ou égale à D/20, D étant le diamètre moyen des grains de ladite matière active, et de préférence encore D₁ est inférieure ou égale à D/100.

Lesdites particules conductrices sont choisies parmi des particules de carbone, des particules de métal, comme du nickel par exemple, ou de la poudre d'un composé d'un métal de transition comme Co, CoO ou Co(OH)₂.

On entend par "fibre" une très petite quantité de matière, dont une dimension de l'espace est grande devant les deux autres, définie par une dimension transversale moyenne D₂ et une longueur moyenne L₂. De préférence lesdites fibres conductrices ont une dimension transversale moyenne D₂ inférieure ou égale à D, et une longueur moyenne L₂ supérieure ou égale à 25 fois la valeur de D₂, et de préférence L₂ est supérieure ou égale à 75 fois D₂. Lesdites fibres conductrices sont choisies parmi des fibres de carbone, des fibres de métal ou des fibres recouvertes de métal, comme le nickel par exemple.

Selon une forme d'exécution préférentielle, on choisira D₁ inférieure ou égale à 0,1 µm et D₂ inférieure ou égale à 2 µm.

De préférence, la proportion dudit matériau conducteur dans ladite pâte est comprise entre 3% et 15% en poids de ladite matière active. Au-delà de cette valeur, la capacité volumique de l'électrode diminue du fait de la grande proportion de matériau conducteur dans l'électrode.

Ladite pâte peut contenir en outre au moins un autre composé choisi parmi les composés du zinc comme ZnO ou Zn(OH)₂, de l'yttrium comme Y₂O₃ ou Y(OH)₃, et du calcium comme CaO, Ca(OH)₂ ou CaF₂. Ce composé est habituellement ajouté sous forme pulvérulente.

Afin de faciliter la réalisation de l'électrode, ladite pâte comprend en outre un épaississant qui est un composé cellulosique choisi parmi la carboxyméthylcellulose (CMC), l'hydroxypropylméthylcellulose (HPMC), l'hydroxypropylcellulose (HPC), et l'hydroxyéthylcellulose (HEC).

On entend par support bidimensionnel, un support plan sur lequel est déposé une couche de pâte. Les propriétés adhésives du liant sont donc essentielles pour maintenir la couche sur le support, notamment en cas de spiralage de l'électrode. Le support conducteur bidimensionnel peut être un feuillard plein ou perforé, un métal déployé, une grille ou un tissu. Il est par exemple un feuillard en acier nickelé d'épaisseur comprise entre 3.10⁻³mm et 10⁻²mm, de masse surfacique comprise entre 3g/dm² et 6g/dm², avec un taux de jour compris entre 0% et 80%, le diamètre des trous étant compris entre 0,1mm et 3mm. Selon une variante, le support peut être également une mousse de très faible masse surfacique 2 à 7g/dm² comportant le feuillard précédent en son centre.

La présente invention a comme avantage la commodité de fabrication des électrodes car la plupart des polymères peuvent être utilisés sous la forme d'une émulsion aqueuse; la fabrication des électrodes par empâtage par voie humide suivi du séchage est facilitée (pâte stable avec de bonnes propriétés rhéologiques).

L'invention sera mieux comprise, et d'autres avantages et particularités apparaîtront à la lecture de la description qui va suivre, donnée à titre illustratif et non limitatif.

D'une part les tests sont réalisés sur les liants suivants de l'art antérieur : un copolymère fluoré éthylène / propylène (FEP), le polytétrafluoroéthylène (PTFE), le polyéthylène (PE), le polyamide (PA), un copolymère styrène / éthylène / butylène / styrène (SEBS), un terpolymère styrène / butadiène / vinylpyridine (SBVR) de composition pondérale 15/70,7/14,3 et un copolymère carboxylé styrène /butadiène (SBR) à 30% de styrène. D'autre part les mêmes tests sont effectués sur des liants selon la présente invention constitués par un mélange de SEBS d'une part ou de SBR carboxylé d'autre part avec du polytétrafluoroéthylène (PTFE), ou avec du polyéthylène (PE) ou bien encore avec un copolymère fluoré éthylène / propylène (FEP).

Dans un premier temps, on a comparé les propriétés mécaniques intrinsèques des différents liants.

Ces propriétés ont mesurées sur des éprouvettes "haltères", de dimensions 40mm x 4mm x 1mm, réalisées avec les liants mentionnés ci-dessus. Le tableau I ci-dessous présente les valeurs du module d'élasticité E et de la contrainte à la rupture K exprimées en Méga Pascals (Mpa), ainsi que le % d'allongement à la rupture L.

**TABLEAU I**

| Liants | E | K | L |
|---|---|---|---|
| PA | 16 | 1,72 | 10 |
| SEBS | 6 | - | - |
| SBVR | 0,5 | 0,3 | 219 |
| SBR carboxylé | 0,25 | 0,7 | 630 |
| 40% en poids de SBR carboxylé + 60% en poids de PTFE | 3,1 | 0,6 | 400 |
| 50% en poids de SBR carboxylé + 50% en poids de PTFE | 1,7 | 0,5 | 580 |
| 40% en poids de SBR carboxylé + 60% en poids de PE | 7,3 | 2,2 | 130 |
| 50% en poids de SBR carboxylé + 50% en poids de PE | 5,4 | 0,9 | 270 |
| 40% en poids de SBR carboxylé + 60% en poids de FEP | 9,5 | 2 | 590 |
| 50% en poids de SBR carboxylé + 50% en poids de FEP | 7,1 | 1,65 | 735 |

Dans le cas des polymères FEP, PTFE, PE employés seuls, la cohésion de l'électrode s'est révélée insuffisante pour que ces mesures puissent être effectuées.

Les mélanges selon l'invention comprenant du SBR carboxylé et un polymère cristallin réalisent un bon compromis. Ils supportent des déformations importantes (allongement à la rupture élevé), ce qui entraîne une grande souplesse des électrodes.

Dans un deuxième temps, on évalue la stabilité chimique du polymère comme liant d'électrode dans les conditions de son utilisation. Des électrodes sont fabriquées de la manière suivante à l'aide des liants mentionnés précédemment.

On réalise une pâte en phase aqueuse comprenant un mélange de 97,9% en poids de matière active (hydroxyde de nickel), de 2% en poids du liant choisi et de 0,1% en poids d'un épaississant cellulosique (HPMC), auquel est ajoutée de l'eau à raison de 27% en poids du mélange. Les liants sont introduits dans la pâte sous forme de dispersion aqueuse, à l'exception du SEBS qui est préalablement dissout dans une quantité minimale de toluène.

La pâte est enduite sur un feuillard de nickel perforé ayant une épaisseur de 0,1mm, une masse surfacique de 4,6g/dm2 et un taux de jour (surface perforée / surface totale) de 42%. L'ensemble est séché à une température d'environ 130°C pour obtenir une électrode.

On observe la souplesse S de ces différentes électrodes. Puis on essaye de les spiraler et on observe leur résistance R. Les résultats qualitatifs obtenus sont rassemblés dans le tableau II ci-dessous et exprimés de la manière suivante :

| | |
|---|---|
| + + | très bonne tenue mécanique (pas d'effritement, ni de fissure) |
| + | bonne tenue mécanique (pas d'effritement mais apparition de fissure) |
| +/- | tenue mécanique moyenne (légère perte de matière) |
| - | mauvaise tenue mécanique (perte de matière importante) |
| -- | pas de cohésion de l'électrode |

**TABLEAU II**

| Liants | S | R |
|---|---|---|
| FEP | - - | - - |
| PTFE | - | - |
| PE | - | - |
| PA | + | +/- |
| SEBS | + + | + + |
| SBVR | + + | + + |
| SBR carboxylé | + + | + + |
| 60% en poids de SBVR + 40% en poids de PTFE | + | + + |
| 50% en poids de SBR carboxylé + 50% en poids de PTFE | + - | + + |
| 40% en poids de SEBS carboxylé + 60% en poids de PE | + + | - |
| 40% en poids de SBR carboxylé + 60% en poids de PE | + + | - |
| 40% en poids de SEBS carboxylé + 60% en poids de FEP | + + | + - |
| 40% en poids de SBR carboxylé + 60% en poids de FEP | + + | + - |
| 50% en poids de SBR carboxylé + 50% en poids de FEP | + + | + |
| 60% en poids de SBR carboxylé + 40% en poids de FEP | + + | + |

L'association des propriétés de l'élastomère et du polymère cristallin présente un grand intérêt pour l'utilisation du mélange selon l'invention dans une électrode : la souplesse et l'adhésion au feuillard sont apportées par l'élastomère et la cohésion de l'ensemble de l'électrode est assurée par le polymère cristallin.

Puis on assemble des accumulateurs Ni-MH, de capacité 5Ah environ, comportant trois électrodes négatives ayant comme matière active un alliage hydrurable de type AB₅, un séparateur bicouche de polyoléfine, et deux électrodes positives qui sont respectivement les électrodes précédemment fabriquées.

Ces accumulateurs sont soumis à une charge à 0,2lc pendant 5 heures, où lc est le courant nécessaire pour décharger la capacité nominale d'un accumulateur en 1 heure, suivie d'une surcharge permanente à 0,02 lc pendant 96 jours. On a alors mesuré l'augmentation en % de la teneur T en carbonates dans l'électrolyte par rapport à un accumulateur ne contenant pas de liant. Ce paramètre est représentatif de la stabilité chimique du liant dans l'électrolyte.

**TABLEAU III**

| Liants | T |
|---|---|
| FEP | 2,3 |
| PTFE | 9 |
| PE | 6 |
| PA | 5 |
| SBR carboxylé | 1,6 |
| 40% en poids de SBR carboxylé + 60% en poids de PE | 4 |
| 40% en poids de SBR carboxylé + 60% en poids de FEP | 2 |
| 50% en poids de SBR carboxylé + 50% en poids de FEP | 2 |
| 60% en poids de SBR carboxylé + 40% en poids de FEP | 2 |

Ces résultats montrent que le liant selon l'invention est stable dans l'électrolyte.

## Revendications

1. Electrode non-frittée au nickel comportant un support conducteur bidimensionnel et une pâte comprenant une matière électrochimiquement active contenant de l'hydroxyde de nickel et un liant qui est un mélange d'un élastomère et d'un polymère cristallin, la proportion dudit élastomère étant comprise entre 25% et 60% en poids dudit liant et la proportion dudit polymère cristallin étant comprise entre 40% et 75% en poids dudit liant.

2. Electrode selon la revendication 1, dans laquelle ledit liant se compose de 40% à 60% en poids dudit élastomère et de 40% à 60% en poids dudit polymère cristallin.

3. Electrode selon l'une des revendications 1 et 2, dans laquelle ledit élastomère est réticulable.

4. Electrode selon l'une des revendications précédentes, dans laquelle ledit élastomère est choisi parmi un copolymère de styrène, d'éthylène, de butylène et de styrène, un terpolymère de styrène, de butadiène et de vinylpyridine, et un copolymère de styrène et de butadiène.

5. Electrode selon la revendication 4, dans laquelle ledit élastomère est un copolymère carboxylé réticulable de styrène et de butadiène.

6. Electrode selon l'une des revendications précédentes, dans laquelle ledit polymère cristallin est choisi parmi un polymère fluoré et une polyoléfine.

7. Etectrode selon la revendication 6, dans laquelle ledit polymère cristallin est le polyéthylène.

8. Electrode selon la revendication 6, dans laquelle ledit polymère cristallin est un polymère fluoré choisi parmi un copolymère fluoré d'éthylène et de propylène, le polytétrafluoroéthylène, et l'hexafluoropropylène.

9. Electrode selon l'une des revendications précédentes, dans laquelle la proportion dudit liant est comprise entre 0,7% et 3% en poids de ladite pâte.

10. Electrode selon l'une des revendications précédentes, dans laquelle ledit hydroxyde de nickel contient au moins un hydroxyde syncristallisé d'un élément choisi parmi le zinc, le cadmium et le magnésium et au moins un hydroxyde syncristallisé d'un élément choisi parmi le cobalt, le manganèse, l'aluminium, l'yttrium, le calcium, le strontium, le zirconium, le cuivre.

11. Electrode selon l'une des revendications précédentes, dans laquelle ladite pâte comprend en outre un matériau conducteur choisi parmi des particules conductrices, des fibres conductrices et leurs mélanges.

12. Electrode selon la revendication 11, dans laquelle lesdites particules conductrices ont une dimension moyenne D₁ inférieure ou égale à D/20, D étant le diamètre moyen des grains de ladite matière active.

13. Electrode selon l'une des revendications 11 et 12, dans laquelle lesdites particules conductrices sont choisies parmi des particules de carbone, des particules de métal et de la poudre d'un composé d'un métal de transition.

14. Electrode selon la revendication 11, dans laquelle lesdites fibres conductrices ont une dimension transversale moyenne D₂ inférieure ou égale à D, D étant le diamètre moyen des grains de ladite matière active, et une longueur moyenne L₂ supérieure ou égale à 25 fois la valeur de D₂.

15. Electrode selon l'une des revendications 11 et 14, dans laquelle lesdites fibres conductrices sont choisies parmi des fibres de carbone, des fibres de métal ou des fibres recouvertes de métal.

16. Electrode selon l'une des revendications précédentes, dans laquelle la proportion dudit matériau conducteur dans ladite pâte est comprise entre 3% et 15% en poids de ladite matière active.

17. Electrode selon l'une des revendications précédentes, dans laquelle ladite pâte contient en outre au moins un autre composé choisi parmi les composés du zinc, de l'yttrium, et du calcium.

18. Electrode selon l'une des revendications précédentes, dans laquelle ladite pâte comprend en outre un épaississant qui est un composé cellulosique choisi parmi la carboxyméthylcellulose, l'hydroxypropylméthylcellulose, l'hydroxypropylcellulose, et l'hydroxyéthylcellulose.

19. Electrode selon l'une des revendications précédentes, dans laquelle ledit support conducteur bidimensionnel est choisi parmi un feuillard plein ou perforé, un métal déployé, une grille ou un tissu.

20. Générateur électrochimique secondaire à électrolyte alcalin contenant une électrode au nickel selon l'une des revendications précédentes.

## Claims

1. A non-sintered nickel electrode containing a two-dimensional conductive support and a paste comprising an electrochemically active material containing nickel hydroxide and a binder which is a mixture of an elastomer and a crystalline polymer, wherein the proportion of the elastomer is in the range 25% to 60% by weight of the binder and the proportion of the crystalline polymer is in the range 40% to 75% by weight of the binder.

2. The electrode as claimed in claim 1, in which the binder is composed of 40% to 60% by weight of the elastomer and 40% to 60% by weight of the crystalline polymer.

3. The electrode as claimed in claim 1 or 2, in which the elastomer is crosslinkable.

4. An electrode as claimed in one of the preceding claims, in which the elastomer is chosen from a copolymer of styrene, of ethylene, of butylene and of styrene, a terpolymer of styrene, of butadiene and of vinylpyridine and copolymer of styrene and of butadiene.

5. An electrode as claimed in claim 4, in which the elastomer is a crosslinkable carboxylated copolymer of styrene and of butadiene.

6. An electrode as claimed one of the preceding claims, in which the crystalline polymer is chosen from a fluorinated polymer and a polyolefin.

7. An electrode as claimed in claim 6, in which the crystalline polymer is polyethylene.

8. An electrode as claimed in claim 6, in which the crystalline polymer is a fluorinated polymer chosen from a fluorinated copolymer of ethylene and of propylene, polytetrafluoroethylene and hexafluoropropylene.

9. An electrode as claimed in one of the preceding claims, in which the proportion of the binder is in the range 0.7% to 3% by weight of the paste.

10. An electrode as claimed one of the preceding claims, in which the nickel hydroxide contains at least one syncrystallized hydroxide of an element chosen from zinc, cadmium and manganese and at least one syncrystallized hydroxide of an element chosen from cobalt, manganese, aluminum, yttrium, calcium, strontium, zirconium and copper.

11. An electrode as claimed in one of the preceding claims, in which the paste also comprises a conductive material chosen from conductive particles, conductive fibers and mixtures thereof.

12. An electrode as claimed in claim 11, in which the conductive particles have an average size D₁ less than or equal to D/20, D being the average diameter of the grains of the active material.

13. An electrode as claimed in claim 11 or 12, in which the conductive particles are chosen from carbon particles, metal particles and powder of a transition metal compound.

14. An electrode as claimed in claim 11, in which the conductive fibers have an average transverse dimension D₂ less than or equal to D, D being the average diameter of the grains of the active material, and an average length L₂ greater than or equal to 25 times the value of D₂.

15. An electrode as claimed in claim 11 or 14, in which the conductive fibers are chosen from carbon fibers, metal fibers and metal-coated fibers.

16. An electrode as claimed in one of the preceding claims, in which the proportion of the conductive material in the paste is in the range 3% to 15% by weight of the active material.

17. An electrode as claimed in one of the preceding claims, in which the paste also contains at least one other compound chosen from zinc, yttrium and calcium compounds.

18. An electrode as claimed in one of the preceding claims, in which the paste also comprises a thickener which is a cellulose compound chosen from carboxymethylcellulose, hydroxypropylmethylcellulose, hydroxypropylcellulose and hydroxyethylcellulose.

19. An electrode as claimed in one of the preceding claims, in which the two-dimensional conductive support is chosen from a flat or perforated strip, an expanded metal, a mesh or a fabric.

20. A secondary cell containing an alkaline electrolyte and a nickel electrode as claimed in any one of the preceding claims.

## Patentansprüche

1. Ungesinterte Nickelelektrode, enthaltend einen zweidimensionalen leitenden Träger und eine Paste aus einem elektrochemischen aktiven Werkstoff, der Nickelhydroxid und einen Binder enthält, wobei es sich um ein Gemisch aus einem Elastomer und einem kristallinen Polymer handelt, in welchem der Anteil des Elastomers zwischen 25 und 60 Gew.-% des Binders beträgt und der Anteil des kristallinen Polymers zwischen 40 und 75 Gew.-% des Binders beträgt.

2. Elektrode nach Anspruch 1, in der der Binder sich aus 40-60 Gew.-% des Elastomers und 40-60 Gew.-% des kristallinen Polymers zusammensetzt.

3. Elektrode nach Anspruch 1 oder 2, bei der das Elastomer vernetzbar ist.

4. Elektrode nach einem der vorhergehenden Ansprüche, in der das Elastomer ausgewählt ist aus einem Copolymer von Styrol, Ethylen, Butylen und Styrol, einem Terpolymer von Styrol. Butadien und Vinylpyriden, und einem Copolymer von Styrol und Butadien.

5. Elektrode nach Anspruch 4, in der das Elastomer ein vernetzbares Carboxyl-Copolymer von Styrol und Butadien ist.

6. Elektrode nach einem der vorhergehenden Ansprüche, in der das kristalline Polymer ausgewählt ist aus einem Fluorpolymer und einem Polyolefin.

7. Elektrode nach Anspruch 6, in der das kristalline Polymer Polyethylen ist.

8. Elektrode nach Anspruch 8, in der das kristalline Polymer ein Fluorpolymer ist, ausgewählt aus einem Fluorpolymer von Ethylen und Propylen, Polytetrafluorethylen und Hexafluorpropylen.

9. Elektrode nach einem der vorhergehenden Ansprüche, in der das Verhältnis des Bindemittels zwischen 0,7 und 3 Gew.-% der Paste liegt.

10. Elektrode nach einem der vorhergehenden Ansprüche, in der das Nickelhydroxid mindestens ein synkristallisiertes Hydroxid eines Elements aus der Gruppe Zink, Cadmium und Magnesium und mindestens ein synkristallisiertes Hydroxid eines Elements aus der Gruppe Cobalt, Mangan, Aluminium, Itrium, Calcium, Strontium, Zirkon und Kupfer enthält.

11. Elektrode nach einem der vorhergehenden Ansprüche, in der die Paste außerdem einen leitenden Werkstoff enthält, ausgewählt aus leitenden Partikeln, leitenden Fasern und deren Gemischen.

12. Elektrode nach Anspruch 11, in der die leitenden Partikel eine mittlere Abmessung D₁ von ≤ D/20 aufweisen, wobei D der mittlere Durchmesser der Kerne des aktiven Materials ist.

13. Elektrode nach einem der Ansprüche 11 und 12, in der die leitenden Partikel ausgewählt sind aus Kohlenstoffpartikeln, Metallpartikeln und dem Pulver einer Übergangsmetall-Zusammensetzung.

14. Elektrode nach Anspruch 11, in der die leitenden Fasern eine durchschnittliche Querabmessung D₂ von ≤ D aufweisen, wobei D der mittlere Durchmesser der Körner des aktiven Materials ist, und eine mittlere Länge L₂ von ≥ dem 25fachen des Werts von D₂ haben.

15. Elektrode nach einem der Ansprüche 11 und 14, in der die leitenden Fasern ausgewählt sind aus Kohlenstofffasern, Metallfasern oder mit Metall überzogenen Fasern.

16. Elektrode nach einem der vorhergehenden Ansprüche, in der der Anteil des leitenden Materials an der Paste zwischen 3 und 15 Gew.-% des aktiven Materials beträgt.

17. Elektrode nach einem der vorhergehenden Ansprüche, in der die Paste außerdem mindestens eine weitere Zusammensetzung enthält, ausgewählt aus Zusammensetzungen aus Zink, Itrium und Calcium.

18. Elektrode nach einem der vorhergehenden Ansprüche, in der die Paste außerdem ein Verdickungsmittel enthält, bei dem es sich um eine Cellulose-Zusammensetzung handelt, ausgewählt aus Carboxymethylcellulose, Hydroxypropylmethylcellulose, Hydroxypropylcellulose und Hydroxyethylcellulose.

19. Elektrode nach einem der vorhergehenden Ansprüche, in der der zweidimensionale leitende Träger ausgewählt ist aus einem durchgehenden oder perforierten Bandmaterial, einem gewalzten Metall, einem Gitter oder einem Gewebe.

20. Elektrochemischer, mit alkalischem Elektrolyt arbeitender Sekundärgenerator, enthaltend eine Nickelelektrode gemäß einem der vorhergehenden Ansprüche.
